(19) Europäisches Patentamt / European Patent Office / Office européen des brevets

(11) **EP 3 436 521 B1**

(12) **EUROPEAN PATENT SPECIFICATION**

(45) Date of publication and mention of the grant of the patent:
**16.02.2022 Bulletin 2022/07**

(21) Application number: **17709516.3**

(22) Date of filing: **17.02.2017**

(51) International Patent Classification (IPC):
$C08L\ 23/08^{(2006.01)}$    $C08L\ 23/14^{(2006.01)}$
$C08L\ 23/12^{(2006.01)}$    $B32B\ 27/32^{(2006.01)}$
$B32B\ 7/04^{(2019.01)}$     $B32B\ 27/08^{(2006.01)}$
$B32B\ 27/18^{(2006.01)}$    $B32B\ 27/20^{(2006.01)}$
$B32B\ 27/22^{(2006.01)}$    $B32B\ 27/24^{(2006.01)}$

(52) Cooperative Patent Classification (CPC):
(C-Sets available)
**C08L 23/0815; B32B 7/04; B32B 27/08;**
**B32B 27/18; B32B 27/20; B32B 27/22;**
**B32B 27/24; B32B 27/32; B32B 27/327;**
**C08L 23/08; C08L 23/12;** B32B 2250/242;
B32B 2270/00; B32B 2307/40; B32B 2307/50;
(Cont.)

(86) International application number:
**PCT/US2017/018285**

(87) International publication number:
**WO 2017/172102 (05.10.2017 Gazette 2017/40)**

(54) **LOW CRYSTALLINE POLYMER COMPOSITIONS PREPARED IN A DUAL REACTOR**

NIEDRIGKRISTALLINISCHE POLYMERZUSAMMENSETZUNGEN IN EINEM DOPPELREAKTOR

COMPOSITIONS POLYMÈRES FAIBLEMENT CRISTALLINES PRÉPARÉES DANS UN DOUBLE RÉACTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2016 US 201662315929 P**
**24.05.2016 EP 16170985**

(43) Date of publication of application:
**06.02.2019 Bulletin 2019/06**

(73) Proprietor: **ExxonMobil Chemical Patents Inc.**
**Baytown, TX 77520 (US)**

(72) Inventors:
• **VAN HOYWEGHEN, Danny**
**3001 Heverlee (BE)**
• **MITCHELL, Cynthia, A.**
**Houston**
**TX 77008 (US)**
• **VAN LOON, Achiel, J.m.**
**2900 Schoten, Antwerp (BE)**
• **DHARMARAJAN, Narayanaswami**
**Houston**
**TX 77059 (US)**
• **DATTA, Sudhin**
**Houston**
**TX 77007 (US)**

(74) Representative: **ExxonMobil Chemical Europe Inc.**
**IP Law Europe**
**Hermeslaan 2**
**1831 Machelen (BE)**

(56) References cited:
**WO-A1-2006/044149    US-A1- 2009 163 642**
**US-B2- 7 585 917**

(52) Cooperative Patent Classification (CPC): (Cont.)
B32B 2307/518; B32B 2307/558; B32B 2307/5825;
B32B 2307/704; B32B 2307/732; B32B 2410/00;
B32B 2439/60; B32B 2439/70; B32B 2535/00;
B32B 2553/00; B32B 2553/026; B32B 2555/00;
B32B 2555/02; C08L 2203/16; C08L 2207/02;
C08L 2314/06

C-Sets
**C08F 210/16, C08F 2/001;**
**C08L 23/08, C08L 23/142;**
**C08L 23/0815, C08L 23/142;**

**C08L 23/12, C08L 23/16;**
C08F 210/16, C08F 210/06, C08F 2500/12,
C08F 2500/20, C08F 2500/03

**Description**

deleted

**FIELD OF THE INVENTION**

This application relates to polymer compositions and processes for making thereof, prepared in a dual reactor.

**BACKGROUND OF THE INVENTION**

The present invention relates to low crystalline polymer compositions and processes for making compositions. Polymer compositions having a desirable balance of properties and attributes, leading to enhanced compositions that are useful in a number of applications, are generally sought. Such composition enhancements can manifest themselves in a variety of ways depending on the specific application and the specific blend contemplated. Such enhancements include, but are not limited to: (1) processibility in the molten state in such processes as milling, extrusion, calendering and injection molding; (2) initial physical properties in a solid state such as toughness, tack, adhesion, tear resistance, toughness, sealing, tensile and elongation; (3) improvements in the above-mentioned properties; and (4) long-term maintenance of such physical properties. A variety of approaches have been suggested to obtain polymer compositions with the desired properties and attributes, but those approaches have experienced various shortcomings.

U.S. Patent No. 5,747,592 discloses a thermoplastic composition with polypropylene, rubber, and a plastomer. U.S. Patent No. 8,618,033 discloses an ethylene copolymer with 40-70 wt% of units derived from ethylene and at least 30 wt% of units derived from at least one $\alpha$-olefin having 3 to 20 carbons. U.S. Patent No. 7,585,917 discloses a process for making thermoplastic blend compositions having a physical blend of a first polymer component, having polypropylene, and a second polymer component, having a reactor blend of a propylene polymer and an ethylene $\alpha$-olefin elastomer.

U.S. Patent No. 6,207,756 discloses a polymer dispersion having a substantially amorphous elastomer and a semicrystalline plastic, prepared via a dual reactor in series (i.e., the individual components of the elastomer and semicrystalline are made in separate reactors). U.S. Patent No. 6,319,998 also discloses a polymer blend made by a series reactor process. However, a series reactor process does not allow for much variability in the components produced in each of the reactors. In addition, series reactor process requires the use of a single catalyst. US Patent Application 2009/0163642 describes an in-line fluid phase process for blending low crystallinity polymer components and high crystallinity polymer components to form pellet-stable polyolefin pellets.

There is a need for a dual reactor polymer composition, prepared by a flexible parallel process that provides suitable properties for film applications, including tear resistance and toughness, as compared to compositions currently available.

**SUMMARY OF THE INVENTION**

As described more fully below, the inventors have discovered that a blend composition with a propylene polymer and an ethylene $\alpha$-olefin elastomer, where the composition has a low melt index, is suitable for use in film applications as a compatibilizer, where properties such as tear resistance and film toughness are sought.

Provided herein is a polymer blend composition according to claim 1.

**DETAILED DESCRIPTION OF THE INVENTION**

Various specific embodiments and versions of the present invention will now be described, including preferred embodiments and definitions that are adopted herein. While the following detailed description gives specific preferred embodiments, those skilled in the art will appreciate that these embodiments are exemplary only, and that the present invention can be practiced in other ways. Any reference to the "invention" may refer to one or more, but not necessarily all, of the embodiments defined by the claims. The use of headings is for purposes of convenience only and does not limit the scope of the present invention.

All numerical values within the detailed description and the claims herein are modified by "about" or "approximately" the indicated value, and take into account experimental error and variations that would be expected by a person having ordinary skill in the art.

Various terms as used herein are defined below. To the extent a term used in a claim is not defined below, it should be given the broadest definition persons in the pertinent art have given that term as reflected in at least one printed publication (e.g., a dictionary or article), issued patent or published application.

Continuous. When used to describe a process or an aspect of a process, e.g., a process step, the term "continuous" and its derivatives, including "continuously," shall cover any process or step in which reagents and reacted products are supplied and removed continuously so that steady state, stable reaction conditions can be achieved.

Polymer. Except as required by the particular context, the term "polymer" used herein is the product produced by particular continuous polymerization in a particular polymerization zone or reactor.

Polymerization. As used herein, the term "polymerization" to be given the broadest meaning used by persons skilled in the art refers to the conversion of monomer into polymer. Polymerization zone refers to the zone in which polymerization takes place and is generally formed by a back mixed reactor for forming a substantially random polymer.

Polysplit. As used herein, the term "polysplit" shall mean the calculated result of the weight of the first polymer (ethylene polymer) that is produced from the first polymerization zone divided by the combined weight of the first polymer and the second polymer (propylene polymer). The same definition applies equally to series and parallel reactor configurations. That is, the ethylene polymer is always regarded as the numerator.

Melting Point, Heat of Fusion and Crystallization. The polymers and compositions described herein can be characterized in terms of their melting points (Tm) and heats of fusion, which properties can be influenced by the presence of comonomers or steric impurities that hinder the formation of crystallites by the polymer chains. Measurements were performed on a Pyris 1 Differential Scanning Calorimeter. Samples may be tested in the form of powders, granules, pellet, film, sheet and molded specimens. Sample weight for measurement is 5 +/- 0.5 mg. Materials were tested from -20°C to 18°0C at 10°C/min rates. Melting temperature and heat of fusion are taken from the 2nd Melt. The thermal output is recorded as the area under the melting peak of the sample and is measured in Joules as a measure of the heat of fusion. The melting point is recorded as the temperature of the greatest heat absorption within the range of melting of the sample.

Comonomer Content. The comonomer content of the polymer is measured using 13C nuclear magnetic resonance (NMR). The 13C solution NMR was performed on a 10mm broadband probe at a field of at least 600MHz in tetrachloroethane-d2 solvent at 120°C with a flip angle of 90° and full NOE with decoupling. Sample preparation (polymer dissolution) was performed at 140°C where 0.20 grams of polymer was dissolved in an appropriate amount of solvent to give a final polymer solution volume of 3mL. Chemical shifts were referenced by setting the most intense propylene methyl group signal to 21.83 ppm. The composition calculations of the ethylene propylene copolymer are described by Randall in "A Review Of High Resolution Liquid 13Carbon Nuclear Magnetic Resonance Characterization of Ethylene-Based Polymers", Polymer Reviews, 29:2, pp. 201-317 (1989).

Molecular Weight Characteristics. Mw, Mn and Mw/Mn are determined by using a High Temperature Gel Permeation Chromatography (Agilent PL-220), equipped with three in-line detectors, a differential refractive index detector (DRI), a light scattering (LS) detector, and a viscometer. Experimental details, including detector calibration, are described in: T. Sun, P. Brant, R. R. Chance, and W. W. Graessley, Macromolecules, Volume 34, Number 19, pp. 6812-6820, (2001) and references therein. Three Agilent PLgel 10$\mu$m Mixed-B LS columns are used. The nominal flow rate is 0.5 mL/min, and the nominal injection volume is 300 $\mu$L. The various transfer lines, columns, viscometer and differential refractometer (the DRI detector) are contained in an oven maintained at 145°C. Solvent for the experiment is prepared by dissolving 6 grams of butylated hydroxytoluene as an antioxidant in 4 liters of Aldrich reagent grade 1,2,4-trichlorobenzene (TCB). The TCB mixture is then filtered through a 0.1 $\mu$m Teflon filter. The TCB is then degassed with an online degasser before entering the GPC-3D. Polymer solutions are prepared by placing dry polymer in a glass container, adding the desired amount of TCB, then heating the mixture at 160°C with continuous shaking for about 2 hours. All quantities are measured gravimetrically. The TCB densities used to express the polymer concentration in mass/volume units are 1.463 g/ml at room temperature and 1.284 g/ml at 145°C. The injection concentration is from 0.5 to 2.0 mg/ml, with lower concentrations being used for higher molecular weight samples. Prior to running each sample the DRI detector and the viscometer are purged. Flow rate in the apparatus is then increased to 0.5 ml/minute, and the DRI is allowed to stabilize for 8 hours before injecting the first sample. The LS laser is turned on at least 1 to 1.5 hours before running the samples. The concentration, c, at each point in the chromatogram is calculated from the baseline-subtracted DRI signal, $I_{DRI}$, using the following equation:

$$c = K_{DRI}I_{DRI}/(dn/dc)$$

where $K_{DRI}$ is a constant determined by calibrating the DRI, and (dn/dc) is the refractive index increment for the system. The refractive index, n = 1.500 for TCB at 145°C and $\lambda$ = 690 nm. Units on parameters throughout this description of the GPC-3D method are such that concentration is expressed in g/cm$^3$, molecular weight is expressed in g/mole, and intrinsic viscosity is expressed in dL/g.

The LS detector is a Wyatt Technology High Temperature DAWN HELEOS. The molecular weight, M, at each point in the chromatogram is determined by analyzing the LS output using the Zimm model for static light scattering (M.B. Huglin, LIGHT SCATTERING FROM POLYMER SOLUTIONS, Academic Press, 1971):

$$\frac{K_o c}{\Delta R(\theta)} = \frac{1}{MP(\theta)} + 2A_2 c .$$

Here, $\Delta R(\theta)$ is the measured excess Rayleigh scattering intensity at scattering angle $\theta$, c is the polymer concentration determined from the DRI analysis, $A_2$ is the second virial coefficient. $P(\theta)$ is the form factor for a monodisperse random coil, and $K_o$ is the optical constant for the system:

$$K_o = \frac{4\pi^2 n^2 (dn/dc)^2}{\lambda^4 N_A}$$

where $N_A$ is Avogadro's number, and (dn/dc) is the refractive index increment for the system, which take the same value as the one obtained from DRI method. The refractive index, n = 1.500 for TCB at 145°C and $\lambda$ = 657 nm.

A high temperature Viscotek Corporation viscometer, which has four capillaries arranged in a Wheatstone bridge configuration with two pressure transducers, is used to determine specific viscosity. One transducer measures the total pressure drop across the detector, and the other, positioned between the two sides of the bridge, measures a differential pressure. The specific viscosity, $\eta_s$, for the solution flowing through the viscometer is calculated from their outputs. The intrinsic viscosity, $[\eta]$, at each point in the chromatogram is calculated from the following equation:

$$\eta_s = c[\eta] + 0.3(c[\eta])^2$$

where c is concentration and was determined from the DRI output.

The branching index ($g'_{vis}$) is calculated using the output of the GPC-DRI-LS-VIS method as follows. The average intrinsic viscosity, $[\eta]_{avg}$, of the sample is calculated by:

$$[\eta]_{avg} = \frac{\sum c_i [\eta]_i}{\sum c_i}$$

where the summations are over the chromatographic slices, i, between the integration limits. The branching index $g'_{vis}$ is defined as:

$$g' vis = \frac{[\eta]_{avg}}{kM_v^\alpha} .$$

$M_V$ is the viscosity-average molecular weight based on molecular weights determined by LS analysis. Z average branching index ($g'_{Zave}$) is calculated using $Ci$ = polymer concentration in the slice i in the polymer peak times the mass of the slice squared, $Mi^2$.

All molecular weights are weight average unless otherwise noted. All molecular weights are reported in g/mol unless otherwise noted.

Mooney Viscosity. The term "Mooney Viscosity" a term used to characterize certain polymers, polymer components, and polymer compositions herein. As used herein, the term Mooney Viscosity (ML (1+4) at 125°C) or simply "Mooney Viscosity," to be defined and measured according to the definition and measurement procedure set forth in U.S. Patent No. 6,686,415. Alternatively, any "Mooney Viscosity" value referenced herein (including those in the claims) is deemed to encompass any Mooney Viscosity measured in accordance with any recognized, published procedure for measuring Mooney Viscosity.

MI. The term "MI" used herein stands for "Melt Index". The units for "MI" are grams per 10 minutes and the test to be herein for determining MFR/MI is set forth in any version and condition set forth in ASTM-1238 that uses 2.16 kg at 190°C.

One or more of the compositions described herein, the ethylene polymer is present in the composition in an amount of more than 65 wt% based on the total weight of the polymer composition.

One or more of the compositions described herein, further comprises a filler, or a plasticizer, or both.

In one or more of the compositions described herein, the polymer composition is substantially free from diene units.

In one or more of the compositions described herein, the ethylene polymer is a low crystalline ethylene propylene copolymer.

In one or more of the compositions described herein, the blend is a reactor blend formed in a parallel process.

Blends

The composition described herein is a blend. Preferably, the composition is a reactor blend. The reactor blends include at least a first polymer (ethylene polymer) and a second polymer (propylene polymer), as discussed below. The term "reactor blend" to be given the broadest meaning and/or scope that persons skilled in the art have given that term, as reflected in how the term has been used in at least one patent or printed publication.

Nevertheless, a "reactor blend" herein distinguished from a "physical blend", the latter being the combination of two or more polymers that have already been formed and recovered before being mixed or otherwise combined, e.g., separated (which would preferably also include being devolatilized) from some or all of the remaining polymerization mixture (e.g., unreacted monomers and/or solvent) and then combined together.

The term "reactor blend" does not preclude (except to the extent stated otherwise) two components that have reacted to some extent or degree with one another, e.g., where one is a reaction product that is derived from the other, in whole or in part. Nor does the term "reactor blend" preclude two components that are mixed together but that can be separated by conventional means (e.g., fractionation) following formation and therefore can be identified as distinct polymers, e.g., a semicrystalline polymer having a distinct melting point (Tm) and an atactic or amorphous ethylene elastomer having either a low melting point (Tm) or no melting point.

The term "reactor blend" used herein may in certain embodiments refer to a homogenous (e.g., a single phase) material while in other embodiments it may refer to a multiphase blend (e.g., two or more distinct phases). A blend formed by melt-blending or dry-blending is a physical blend.

The reactor blend compositions preferably include at least a propylene polymer and an ethylene polymer, although the ethylene polymer is in some cases identifiable by inference and/or by fractionation. The reactor blend includes a major portion by weight (more than 65 wt%) ethylene polymer with a minor portion (less than 35 wt%) propylene polymer.

In certain embodiments of the reactor blend, the first polymer and second polymer form a substantially homogenous reactor blend, meaning that the first polymer and second polymer are part of, or are within, or occupy, the same phase. In other embodiments of the reactor blend, the first polymer and second polymer form distinct phases of a multiphase composition. In certain multiphase embodiments, a reactor blend includes a continuous phase (either the first polymer or the second polymer), which may be a dispersed phase (dispersion) and a discontinuous phase (either the first polymer or the second polymer), which may be a matrix phase. In those embodiments, either the continuous phase or the dispersed phase may represent a major portion of the reactor blend. Also, at least one embodiment of the reactor blend is a multiphase composition having a continuous phase that includes first polymer as a minor portion of the reactor blend and a dispersed phase that includes second polymer as a major portion. Further, in any of the above embodiments, the second polymer can be crosslinked. The various polysplit ranges identified above may be used.

Multistage Polymerization

The blends described herein are formed in either batch or continuous "multistage polymerization," meaning that two (or more) different polymerizations (or polymerization stages) are conducted. More specifically, the multistage polymerization is conducted in a parallel process.

The polymers made in the respective reactors of the continuous, multiple reactor solution plant are blended when in solution without prior isolation from the solvent. The blend is the result of parallel reactor operation where the effluents of both reactors are combined and submitted to finishing steps. This provides an intimate admixture of the polymers in the devolatilized blend. This also permits a wide variety of polysplits to be prepared whereby the proportion of the amounts of polymers produced in the respective reactors can be varied widely.

The first polymer and second polymer making up the blend composition are discussed below, followed by a section on the parallel process.

Ethylene Polymer

The blends described herein include a first polymer component (first polymer), which preferably is (or includes) an elastomer that is predominantly ethylene. The crystallinity, and hence other properties as well, of the first polymer are preferably different from those of the second polymer.

The polymers described herein are predominantly ethylene, i.e., having more than 75 wt% units derived from ethylene monomer. The ethylene content of the ethylene polymer is greater than or equal to 75 wt% to less than about 85 wt% or 90 wt%. In an embodiment, the ethylene polymer has a propylene content of less than 25%, or 23 wt% to greater than about 15 wt% or about 10 wt%. In an embodiment, the ethylene polymer has a $C_4$-$C_{20}$ $\alpha$-olefin content of less than about 5 wt%. Preferably, the first polymer (also referred to as the "ethylene polymer") has some crystalline (including "semi-crystalline"), also referred to herein as "crystallinity derived from ethylene." But any crystallinity of the first polymer is derived from the ethylene. The percent crystallinity in such cases is measured as a percentage of polyethylene crystallinity and thus the origin of the crystallinity from ethylene is established.

Preferably, in addition to units derived from ethylene, the first polymer also includes units derived from an $\alpha$-olefin monomer. Suitable $\alpha$-olefin monomers include, but are not limited to propylene, butene, pentene, hexene, heptene, or octene, and their isomers. Advantageously, the first polymer can be formulated using different $\alpha$-olefin monomers, selected from the list above, and/or different amounts of monomers, e.g., ethylene and $\alpha$-olefin monomers, to prepare different types of polymers, e.g., ethylene polymers having desired properties.

Preferably, the first polymer is formed during (or by) the first polymerization, which in the case of a parallel process, involving parallel polymerization and/or parallel reactors, the "first polymer" may be formed at the same time as the "second polymer," but the product streams (still including solvent) are combined after the first and second polymers are sufficiently formed.

One purpose of the first polymer is to enhance the attributes of the second polymer. Such enhancements can manifest themselves in a variety of ways depending on the specific application and the specific blend contemplated. Such enhancements include, but are not limited to, improvements in cure rate and state; processability as defined by such processes as milling, extrusion, calendering and injection molding; physical properties such as toughness, tack, adhesion, tear resistance, tensile and elongation and heat aging as defined by the retention of such physical properties at elevated temperatures. In addition, the inclusion of a reactor blend of two polymers (the first ethylene-based and the second propylene-based) improves the compatibility properties of resultant blend, when used as in a film layer between an ethylene-based film layer and a propylene-based film layer.

Propylene Polymer

As noted above, the blends herein include at least a propylene polymer, which is formed by a second polymerization reaction (under conditions described elsewhere herein) in a "second reactor" part of a parallel process.

The propylene polymer should have (at minimum) 40 wt% propylene units, and preferably more, as noted below. The propylene polymer is preferably a polypropylene copolymer having 60 wt% or more units derived from propylene, having isotactically arranged propylene derived sequences and having a heat of fusion less than 45 J/g. Also, the polypropylene copolymer preferably has at least 5 wt% non-propylene comonomer units, e.g., ethylene units, and more preferably at least 10 wt% or more ethylene units.

The propylene polymer preferably comprises >60 wt%, more preferably >75 wt% propylene-derived units. In some embodiments, the propylene polymer comprises from 75-95 wt% of propylene-derived units, more preferably from 80-90 wt% of propylene-derived units, the balance comprising one or more $\alpha$-olefins. Other suitable embodiments include propylene derived units in an amount (based on the weight of propylene and $\alpha$-olefin) ranging from about 75-93 wt%, more preferably about 75-92.5 wt%, more preferably about 75-92 wt%, more preferably 75-92.5 wt%, more preferably 82.5-92.5 wt%, and more preferably about 82.5-92 wt%. Corresponding . $\alpha$-olefin ranges include 5-25 wt%, more preferably 7-25 wt%, more preferably 7.5-25 wt%, more preferably 7.5-17.5 w% and more preferably 8-17.5 wt% (based on the weight of propylene and $\alpha$-olefin). A preferred $\alpha$-olefin is ethylene. The propylene polymer preferably has a MFR < about 800, more preferably < about 500, more preferably < about 200, more preferably < about 100, more preferably < about 50. Particularly preferred embodiments include a propylene polymer with an MFR of from about 1-25, more preferably about 1-20. The crystallinity of the first polymer should be derived from isotactic polypropylene sequences. The isotacticity of the propylene polymer can be illustrated by the presence of a preponderance of the propylene residues in the polymer in mm triads. As noted elsewhere herein, the tacticity of the propylene polymer is preferably greater than the tacticity of either the reactor blend or the ethylene polymer, e.g., where the propylene polymer is isotactic and the ethylene polymer is atactic.

The crystallinity of the propylene polymer can be expressed in terms of heat of fusion. The propylene polymer of the invention can have a heat of fusion, as determined by DSC, ranging from a lower limit of 1 J/g, or 1.5 J/g, or 3 J/g, or 4 J/g, or 6 J/g, or 7 J/g or 10, to an upper limit of 20 or 30 J/g, or 40 J/g, or 50 J/g, or 60 J/g, or 75 J/g. Preferably, the heat of fusion of the propylene polymer is less than 45 J/g. Without wishing to be bound by theory, it is believed that the propylene polymer has generally isotactic crystallizable propylene sequences, and the above heats of fusion are believed to be due to the melting of these crystalline segments.

The level of crystallinity of the propylene polymer can also be reflected in its melting point. Preferably, the propylene polymer has a single melting point. However, a sample of propylene copolymer will often show secondary melting peaks adjacent to the principal peak. The highest peak is considered the melting point. The propylene polymer described herein can have a melting point by DSC within the range having an upper limit of 115°C, or 110°C, or 105°C, or 90°C, or 80°C, or 70°C, and a lower limit of 0°C, or 20°C, or 25°C, or 30°C, or 35°C, or 40°C, or 45°C. Preferably, the propylene polymer has a melting point of less than 105°C, and more preferably less than 100°C, and even more preferably less than 90°C. Also, it is preferred that the propylene polymer have a melting point greater than about 25°C, or 40°C.

For the propylene polymer, at least 75% by weight of the polymer, or at least 80% by weight, or at least 85% by weight, or at least 90% by weight, or at least 95% by weight, or at least 97% by weight, or at least 99% by weight of the polymer is soluble in a single temperature fraction, or in two adjacent temperature fractions, with the balance of the polymer in immediately preceding or succeeding temperature fractions. These percentages are fractions, for instance in hexane, beginning at 23°C and the subsequent fractions are in approximately 8°C increments above 23°C. Meeting such a fractionation requirement means that a polymer has statistically insignificant intermolecular differences of tacticity of the polymerized propylene.

In certain embodiments, the percentage of mm triads in the propylene polymer, as determined by the method for determining triad tacticity, is in the range having an upper limit of 98%, or 95%, or 90%, or 85%, or 82%, or 80%, or 75%, and a lower limit of 50%, or 60%.

Certain propylene polymers have an isotacticity index greater than 0%, or within the range having an upper limit of 50%, or 25% and a lower limit of 3%, or 10%.

Certain propylene polymers can have a tacticity index (m/r) within the range having an upper limit of 800, or 1000, or 1200, and those polymers may have a lower limit of 40, or 60.

The second polymerization may in certain cases be conducted in the presence of an $\alpha$-olefin; thus the resulting polymer formed when such $\alpha$-olefin is present will include "units derived" from such $\alpha$-olefin. Either the same $\alpha$-olefin or different $\alpha$-olefins can be introduced to the first and second polymerizations. Particular examples of those $\alpha$-olefins are $C_3$-$C_{20}$ $\alpha$-olefins, including, but not limited to, propylene; butene-1; pentene-1,2-methylpentene-1,3-methylbutene-1; hexene-1,3-methylpentene-1,4-methylpentene-1,3,3-dimethylbutene-1; heptene-1; hexene-1; methylhexene-1; dimethylpentene-1 trimethylbutene-1; ethylpentene-1; octene-1; methylpentene-1; dimethylhexene-1; trimethylpentene-1; ethylhexene-1; methylethylpentene-1; diethylbutene-1; propylpentane-1; decene-1; methylnonene-1; nonene-1; dimethyloctene-1; trimethylheptene-1; ethyloctene-1; methylethylbutene-1; diethylhexene-1; dodecene-I and hexadodecene-1.

Parallel Polymerization Process

The following methods can be followed in the production of blends of propylene polymers and ethylene polymers where each component of the blend (e.g., the propylene polymer and the ethylene polymer) contains a different ratio of ethylene to propylene.

Preferably, the composition is a reactor blend. The method discussed below has the advantage of eliminating the need for a melt blending operation and enables intimate blends of the copolymers to be made in the original reaction medium. Such materials have unique properties because they are not subjected to shear degradation in melt processing equipment. The degree of dispersion of each component of the blend is more intimate.

Disclosed herein are continuous processes for making an elastomeric composition that comprises an ethylene polymer and a propylene polymer, the process comprising: polymerizing in a first polymerization zone in a solvent a combined feed of a first monomer system and a first catalyst system to provide a mixture that includes the ethylene polymer, said ethylene polymer preferably being a random copolymer of ethylene and propylene derived units, wherein the ethylene polymer is either noncrystalline or has ethylene-type crystallinity; polymerizing in a second polymerization zone in a solvent a feed of a second monomer system and a second catalyst system capable of providing isotactic stereoregularity to sequences of propylene derived units to provide a mixture of the propylene polymer and unreacted monomers, said propylene polymer preferably having 60 wt% or more units derived from propylene, including isotactically arranged propylene derived sequences and further having a heat of fusion less than 45 J/g or a melting point less than 105°C or both and a Mooney Viscosity (ML (1+4) at 125°C) of from 1 to 45; and combining in the presence of the solvent the propylene polymer and the ethylene polymer wherein the combination of the propylene polymer and the ethylene polymer has a Mooney (ML 1+4 at 125°C) of from 25 to 180, preferably 25 to 40, and a heat of fusion less than 50 J/g.

In one example of a parallel process, two reactors are configured such that monomers, catalyst(s) and solvent are fed independently to each reactor. The first and second polymerizations are preferably taking place simultaneously in a parallel process.

For a particular plant design, the plant productivity is controlled by the bottleneck presented by the recycle system. With parallel reactors the residence time of each reactor can be chosen independently as long as the total solvent flow does not exceed the recycle capacity.

Effluent Streams. As discussed elsewhere herein, during operation of the continuous process, each reactor experiences polymerization that produces an effluent stream. That effluent stream can be composed of polymer produced from the polymerization as well as catalyst and any unreacted monomers. Each effluent stream can be characterized as having a particular polymer concentration. As an example, the polymer concentration in the effluent of each reactor can be maintained in the range of 1 to 30% by weight or between 3 to 20% by weight, based on the total weight of the particular effluent. In parallel reactors, there can be three effluent streams, i.e., one from each reactor and the combined effluent stream. The polymer concentration of the effluent from each of the two reactors preferably represents the polymer made in that reactor alone (which can be measured, for example, by separating the formed polymer from non-polymer materials). Polymer concentration of the combined effluent represents all the polymer material present in the two reactors, measured at a given time, e.g., after a particular residence time or some other set point. That polymer material includes at least the reactor blend, which may include a certain amount of the propylene polymer together with at least one other polymer, e.g., an ethylene polymer or a reaction product of the other reactants themselves, e.g., the monomers, or both forms of reactant product. Although other polymer concentrations or ranges of concentrations may in certain cases be utilized, it is preferred that the first effluent polymer concentration range from a low of 1 wt%, or 2 wt%, or 3 wt%, or 4 wt%, or 5 wt%, or 6 wt%, to a high of 30 wt%, or 25 wt%, or 20 wt%, or 16 wt%, or 12 wt%, or 8 wt%. It is preferred that the combined effluent polymer concentration range from a low of 3 wt%, or 4 wt%, or 5 wt%, or 6 wt%, or 7 wt%, or 8 wt%, to a high of 30 wt%, or 25 wt%, or 20 wt%, or 18 wt%, or 16 wt%, or 14 wt%.

Polymer Recovery. A polymer can be recovered from the effluent of either reactor or the combined effluent, by separating the polymer from other constituents of the effluent. Conventional separation means may be employed. For example, polymer can be recovered from effluent by coagulation with a nonsolvent such as isopropyl alcohol, acetone, or n-butyl alcohol, or the polymer can be recovered by stripping the solvent or other media with heat or steam. One or more conventional additives such as antioxidants can be incorporated in the polymer during the recovery procedure. Possible antioxidants include phenyl-beta-naphthylamine; di-tert-butylhydroquinone, triphenyl phosphate, heptylated diphenylamine, 2,2'-methylene-bis(4-methyl-6-tert-butyl)phenol, and 2,2,4-trimethyl-6-phenyl-1,2-dihydroquinoline. Other methods of recovery such as by the use of lower critical solution temperature (LCST) followed by devolatilization are also envisioned.

Polymerization Rates. For an adiabatic reactor using feed chilling as the method of heat removal, the overall polymerization rate of parallel reactors is set by the difference between the temperature of each reactor and the feed temperature. Since refrigeration is limited by the availability of commercial refrigeration units that are capable of chilling the feed to about -40°C, the economics is driven by the highest temperature at which the two reactors can be operated and still produce the polymer with desired properties such as molecular weight and long chain branching. Other factors that influence polymerization rate (also called production rate) are solvent type and rate, monomer type and polymer composition since the heat of polymerization varies with the choice of monomer.

Molecular Weight. The molecular weight characteristics (e.g., Mw, Mn, etc.) of the reactor blend and also of the individual-propylene polymer and ethylene polymer (polymer components) can in certain circumstances be adjusted depending upon the desired properties of the reactor blend. Those molecular weight characteristics are described elsewhere herein. For example, the molecular weight characteristics of each polymer can be set by choosing the reactor temperature, monomer concentration, and by optionally adding chain transfer agents such as hydrogen. Also, molecular weight can generally be lowered by increasing reaction temperatures, and raised by increasing monomer concentrations.

## Polymerization Catalysts

In a broadest form, the compositions can be prepared using any SSC (single sited catalyst). Such a catalyst may be a transition metal complex generally containing a transition metal Groups 3 to 10 of the Periodic Table; and at least one ancillary ligand that remains bonded to the transition metal during polymerization. Preferably, the transition metal is used in a reduced cationic state and stabilized by a cocatalyst or activator.

The ancillary ligand may be a structure capable of forming a $.\pi$ bond such a cyclopentadienyl type ring structure. The ancillary ligand may also be a pyridinyl or amide ligand. The transition metal is preferably of Group 4 of the Periodic table such as titanium, hafnium or zirconium which are used in polymerization in the $d^0$ mono-valent cationic state and have one or two ancillary ligands as described in more detail hereafter. The important features of such catalysts for coordination polymerization are the ligand capable of abstraction and that ligand into which the ethylene (olefinic) group can be inserted.

The transition metal complex may impose a degree of steric order on the propylene monomer by suitable chirality. Where first polymers of higher molecular weight are desired or higher polymerization temperatures, it is preferable to a non- or weakly coordinated anion (the term non-coordinating anion as used herein includes weakly coordinated anions) as cocatalyst. Alternatively, aluminoxanes or complexes incorporating oxy-aluminum moieties may be used.

A precursor for the non-coordinating anion may be used with a transition metal complex supplied in a reduced valency state. The precursor may undergo a redox reaction. The precursor may be neutral, such as a borane complex and form the transition metal cation by abstracting a ligand from it. The precursor may be an ion pair of which the precursor cation, such as a borate, is neutralized and/or eliminated in some manner. The precursor cation may be an ammonium salt as in EP 277 003 and EP 277 004. The precursor cation may be a triphenyl carbonium derivative as in EP 426 637. The non-coordinating anion can be a Group 10-14 complex wherein boron or aluminum is the charge bearing atom shielded by ligands which may be halogenated and especially perfluorinated. Preferably, tetra-aryl-substituted Group 10-14 non-carbon element-based anion, especially those that are have fluorine groups substituted for hydrogen atoms on the aryl groups, or on alkyl substituents on those aryl groups.

The non-coordinating anion may be used in approximately equimolar amounts relative to the transition metal complex, such as at least 0.25, preferably 0.5, and especially 0.8 and such as no more than 4, preferably 2 and especially 1.5.

The transition metal complex may be a pyridine amine complex useful for olefin polymerization such as those described in WO 03/040201. The transition metal complex may a fluxional complex which undergoes periodic intramolecular re-arrangement so as to provide the desired interruption of stereoregularity as in U.S. Patent No. 6,559,262. The transition metal complex may be a stereorigid complex with mixed influence on propylene insertion, see EP 1070087.

Preferably, the transition metal complex is a chiral bridged bis cyclopentadienyl derivative having the formula $L^A L^B L^C_i MDE$ where $L^A$ and $L^B$ are substituted or unsubstituted cyclopentadienyl or hetero-cyclopentadienyl ancillary ligand $\pi$-bonded to M in which the $L^A$ and $L^B$ ligands are covalently bridged together through a Group 14 element linking group; $L^C_i$ is an optional neutral, non-oxidizing ligand having a dative bond to M (i equals 0 to 3); M is a Group 4 or 5 transition metal; and, D and E are independently mono-anionic labile ligands, each having a $\varsigma$-bond to M, optionally bridged to each other or $L^A$ or $L^B$. The mono-anionic ligands are displaceable by a suitable activator to permit insertion of a polymerizable monomer or macro-monomer can insert for coordination polymerization on the vacant coordination site of the transition metal component.

When using the catalysts, the total catalyst system will generally additionally comprise one or more organometallic compound as scavenger. Such compounds as used in this application is meant to include those compounds effective for removing polar impurities from the reaction environment and for increasing catalyst activity.

In at least one embodiment, a polymerization process consists of or includes a polymerization in the presence of a catalyst including a bis(cyclopentadienyl) metal compound and either (1) a non-coordinating compatible anion activator, or (2) an alumoxane activator. Non-limiting examples of catalyst systems which can be used are described in U.S. Patent Nos. 5,198,401 and 5,391,629. In a particular aspect of this embodiment, an alumoxane activator can be used in an amount to provide a molar aluminum to metallocene ratio of from 1:1 to 20,000:1. In another particular aspect of this embodiment, a non-coordinating compatible anion activator can be used in an amount to provide a molar ratio of biscyclopentadienyl metal compound to non-coordinating anion of from 10:1 to 1:1. In yet another particular aspect of this embodiment, the polymerization reaction is conducted by reacting monomers in the presence of a catalyst system described herein at a temperature of from 0°C to 200°C for a time of from 1 second to 10 hours.

In certain embodiments, the propylene polymer of the present invention may be produced in the presence of a chiral metallocene catalyst with an activator and optional scavenger. The use of single site catalysts is preferred to enhance the homogeneity of the polymer. As only a limited tacticity is needed many different forms of single site catalyst may be used. Possible single site catalysts are metallocenes, such as those described in U.S. Pat. No. 5,026,798, which have a single cyclopentadienyl ring, advantageously substituted and/or forming part of a polycyclic structure, and a hetero-atom, generally a nitrogen atom, but possibly also a phosphorus atom or phenoxy group connected to a group 4 transition metal, preferably titanium but possibly zirconium or hafnium. A further example is $Me_5CpTiMe_3$ activated with $B(CF)_3$ as used to produce elastomeric polypropylene with an Mn of up to 4 million. See Sassmannshausen, Bochmann, Rosch, Lilge, J. Organomet. Chem. (1997) 548, 23-28.

Other possible single site catalysts are metallocenes which are bis cyclopentadienyl derivatives having a group transition metal, preferably hafnium or zirconium. Such metallocenes may be unbridged as in U.S. Patent No. 4,522,982 or U.S. Patent No. 5,747,621. The metallocene may be adapted for producing a polymer comprising predominantly propylene derived units as in U.S. Patent No. 5,969,070 which uses an unbridged bis(2-phenyl indenyl) zirconium dichloride to produce a homogeneous polymer having a melting point of above 7°9C. The cyclopentadienyl rings may be substituted and/or part of polycyclic systems as described in the above U.S. patents.

Other possible metallocenes include those in which the two cyclopentadienyl groups are connected through a bridge, generally a single atom bridge such as a silicon or carbon atom with a choice of groups to occupy the two remaining valencies. Such metallocenes are described in U.S. Patent No. 6,048,950 which discloses bis(indenyl)bis(dimethylsilyl) zirconium dichloride and MAO; WO 98/27154 which discloses a dimethylsilyl bridged bisindenyl hafnium dimethyl together with a non-coordinating anion activator; EP 1070087 which discloses a bridged biscyclopentadienyl catalyst which has elements of asymmetry between the two cyclopentadienyl ligands to give a polymer with elastic properties; and the metallocenes described in U.S. Patent Nos. 6,448,358 and 6,265,212.

The manner of activation of the single site catalyst can vary. Alumoxane and preferably methyl alumoxane can be used. Higher molecular weights can be obtained using non-or weakly coordinating anion activators (NCA) derived and generated in any of the ways amply described in published patent art such as EP 277 004, EP 426 637, and many others. Activation generally is believed to involve abstraction of an anionic group such as the methyl group to form a metallocene cation, although according to some literature zwitterions may be produced. The NCA precursor can be an ion pair of a borate or aluminate in which the precursor cation is eliminated upon activation in some manner, e.g., trityl or ammonium derivatives of tetrakis pentafluorophenyl boron (See EP 277 004). The NCA precursor can be a neutral compound such as a borane, which is formed into a cation by the abstraction of and incorporation of the anionic group abstracted from the metallocene (See EP 426 638).

Specific Catalysts

As noted elsewhere herein, polymerizations in the different reactors may in certain embodiments be conducted in the presence of the same catalyst mixtures, and in other embodiments be conducted in the presence of different catalyst mixtures. As used herein, the term "catalyst mixture" (catalyst system) includes at least one catalyst and at least one activator, although depending on the context, any reference herein to "catalyst" usually also implies an activator as well.

The appropriate catalyst mixture may be delivered to the respective reactor in a variety of ways. For example, it may be delivered as a solution or slurry, either separately to the reactor, activated in-line just prior to the reactor, or preactivated and pumped as an activated solution or slurry to the reactor. Polymerizations are carried out in each reactor, in which reactant components (e.g., desired monomers, comonomers, catalyst/activators, scavengers, and optional modifiers) are preferably added continuously to the appropriate reactor. In some embodiments, both catalyst mixtures are added to the first reactor, while in other embodiments one catalyst mixture is added to the first reactor and a different catalyst mixture is added to the second reactor (although in a sequential operation at least some of the first catalyst mixture from the first reactor may be directed to the second reactor together with the product mixture from the first reactor.

In preferred embodiments, two different catalysts are added as part of different reactant feeds, e.g., a "first catalyst," which may be part of a "first reactant feed," and a "second catalyst," which may be part of a "second reactant feed" although in at least certain embodiments both first and second catalysts are present to some degree in the second reactor feed. Preferably, in at least certain embodiments, the first catalyst is a chiral catalyst while the second catalyst is a non-chiral catalyst.

In certain embodiments of the processes and compositions, the same catalyst mixture can be used for each of the first and second polymerizations. For example, in certain processes, certain catalyst mixtures described in U.S. Patent No. 6,207,756 can be used in both polymerizations, particularly the portions describing the catalyst mixtures, e.g., column 8 line 20 through column 14, line 21. Preferred catalysts are those that are isospecific.

The first catalyst is preferably 1, 1'-bis(4-triethylsilylphenyl)methylene-(cyclopentadienyl)(3,8-di-tertiary-butyl-1-fluroenyl)hafnium dimethyl with dimethylaninliniumtetrakis(pentafluorophenyl)borate activator. The second catalyst is preferably dimethylsilylbis(indenyl)hafnium dimethyl with dimethylaniliniumtetrakis(heptafluoronaphthyl)borate activator.

Useful Articles

Preferred compositions herein are particularly useful for film applications.

The film can be a mono layer or multi-layer film. In an embodiment, the film comprises at least one layer, whether the only layer of the mono-layer film or a layer of a multi-layer film, comprising of from about 5 wt% to about 95 wt% of the polymer composition based on the total weight of the film layer. In an embodiment, that film layer has a thickness of about 1 $\mu$m to about 2,000 $\mu$m; about 5 $\mu$m to about 150 $\mu$m; and about 10 $\mu$m to about 100 $\mu$m; and about 20 $\mu$m to about 90 $\mu$m; and about 15 $\mu$m to about 75 $\mu$m. If part of a multi-layer film structure, the film layer makes up at least 5% of the total film thickness, or at least 10%, or at least 15%, or at least 17%, or at least 20%, or at least 50% of the total film thickness.

The films can be formed by any number of well-known lamination, extrusion or coextrusion techniques. Any of the blown, tentered or cast film techniques commonly used is suitable. For example, a resin composition can be extruded in a molten state through a flat die and then cooled to form a film, in a cast film process. Alternatively, the composition can be extruded in a molten state through an annular die and then blown and cooled to form a tubular, blown film, which can then be used to make sacks or slit and unfolded to form a flat film.

Films with the polymer composition of the invention are expected to possess an excellent balance of mechanical properties, toughness, sealability and cling/adhesive properties. The films can also be used for shrink films and form fill and seal applications requiring abuse resistance. The films also possess good softness/feel and optical/clarity properties useful for food packaging at any temperature.

Specific applications include trash bags, adult care items, agricultural films, aluminum foil laminates, aluminum laminates, asphalt films, auto panel films, bacon packaging, bag-in-box liquid packaging applications, bakery goods, banana film, batch inclusion bags, bathroom tissue overwrap, biaxially oriented films, biaxially oriented polypropylene (BOPP) films, biscuits packages, boutique bags, bread bags, bubble wrap, building film, cake mix packaging, can liners, candy wrap, cardboard liquid packaging, carpet film, carry-out sacks, cement packaging, cereal liners, cheese packaging, chemical packaging, clarity films, coffee packaging, coin bags, collation shrink films, confectionary packaging, construction sheeting, construction film, consumer goods, consumer trash bags, continuous wrap, convenience packaging, cosmetics packaging, counter bags, cover film, cup/cutlery overwrap, deli and bakery wrap, detergent packaging, diaper backsheet, disposables (diapers, sanitary, etc.), dry food packaging, dry grains, dunnage bags, fertilizer, fish & seafood packaging, food packaging, foundation film, freeze-dried products, freezer films, frozen food, fruit juice packaging, furniture bags, garden sacks, garment bags, geomembrane liners, gloves, gravel bags, green house films, grocery sacks, heavy duty-sacks, high clarity collation shrink film, high clarity films, high speed packaging applications, high stiffness overwrap film, horizontal form-fill-and-seal (HFFS) packaging, household wrap, hygiene overwrap films, ice bags, incision drape, industrial hardware packaging, industrial liner, industrial trash bags, industrial spare parts packaging, in store self-service bags, insulation bags, institutional liners, juice bags, kitchen rolls, landscaping bags, lamination films, light duty shrink film, lime bags, liners, liquid packaging, liquid and granular food packaging, low stiffness overwrap film, magazine overwrap, mailer bags, mailers envelopes/sacks, masking film, mayonnaise packaging, meat packaging, medical products, medical draping, medium duty bags, merchandise bags, metallized laminates, military hardware packaging, milk bags, milk powder packaging, modified atmosphere packaging, mulch film, multi-wall sack liner, newspaper bags, nose tissue overwrap, olive oil packaging, packaging of beans, packaging of cementations products such as grout, packaging of dry and sharp products, pallet shrink film, pancake batter bags, paper handkerchief overwrap, paper laminates, pasta overwrap, pelletized polymer, perfume packaging, personal care packaging, pesticides packaging, pharmaceuticals packaging, pigment packaging, pizza packaging, polyamide laminates, polyester laminates, potato product packaging, potting soil bags, pouches, poultry packaging, pre-formed pouches, produce bags, produce packaging, rack and counter film, ready-made food packaging, ready meal packaging, retortable product packaging, films for the rubber industry, sandwich bags, salt bags, sausage packaging, seafood packaging, shipping sacks, shrink bags, shrink bundling film, shrink film, shrink shrouds, shrink tray, shrink wrap, snack food packaging, soft drink packaging, soil bags, soup packaging, spice packaging, stand up pouches, storage bags, stretch films, stretch hooders, stretch wrap, supermarket bags, surgical garb, takeout food bags, textile films, refuse bags, thermoformed containers, thin films, tissue overwrap, tobacco packaging, tomato packaging, ketchup packaging, trash bags, t-shirt bags, vacuum skin packaging, vegetable packaging, vertical form-fill-and-seal (FFS) packaging, horizontal FFS packaging, tubular FFS packaging, and water bottle packaging.

In addition to films, the blends described herein will find utility in other applications like, but not limited to extrusion coating, injection molding, rotomolding, and blow molding applications.

Physical properties of the film can vary from those of the polymer composition, depending on the film forming techniques used. Certain unique properties of the films are described in more detail below.

Examples

In the Examples, P-1 and P-2 are comparative metallocene-catalyzed ethylene-propylene polymers prepared in a single reactor. The catalyst used for preparing P-1 and P-2. P-1 and P-2 were polymerized by the process described herein. Copolymerizations were carried out in a single-phase, liquid-filled, stirred tank reactor with continuous flow of feeds to the system and continuous withdrawal of products under equilibrium conditions. All polymerizations were done in a solvent comprising predominantly $C_6$ alkanes, referred to generally as hexane solvent, using soluble metallocene catalysts and discrete, non-coordinating borate anion as co-catalysts. A homogeneous dilute solution of tri-n-octyl aluminum in hexane was used as a scavenger in concentrations appropriate to maintain reaction. Hydrogen, was added, if necessary, to control molecular weight. The hexane solvent was purified over beds of 3A mole sieves and basic alumina. All feeds were pumped into the reactors by metering pumps, except for the ethylene, which flowed as a gas through a mass flow meter/controller. Reactor temperature was controlled adiabatically by controlled chilling of the feeds and using the heat of polymerization to heat the reactor. The reactors were maintained at a pressure in excess of the vapor pressure of the reactant mixture to keep the reactants in the liquid phase. In this manner the reactors were operated liquid full in a homogeneous single phase. Ethylene and propylene feeds were combined into one stream and then mixed with a pre-chilled hexane stream. A hexane solution of a tri-n-octyl aluminum scavenger was added to the combined solvent and monomer stream just before it entered the reactor to further reduce the concentration of any catalyst poisons. A mixture of the catalyst components in solvent was pumped separately to the reactor and entered through a separate port. The reaction mixture was stirred aggressively using a magna-drive system with three directionally opposed tilt paddle stirrers set to about 750 rpm to provide thorough mixing over a broad range of solution viscosities. Flow rates were set to maintain an average residence time in the reactor of about 10 minutes.

P-4 and P-5 were inventive metallocene-catalyzed ethylene-propylene copolymers. The first ethylene-rich polymer was prepared in a first reactor, the second propylene-rich polymer was prepared in a second reactor, and the ethylene-rich polymer and propylene-rich polymer were reactor blended. The first reactor had 1, 1'-bis(4-triethylsilylphenyl)methylene-(cyclopentadienyl)(3,8-di-tertiary-butyl-1-fluroenyl)hafnium dimethyl catalyst and dimethylaninliniumtetrakis(pentafluorophenyl)borate activator. The second reactor had dimethyl silylbis(indenyl)hafnium dimethyl catalyst and dimethylaniliniumtetrakis(heptafluoronaphthyl)borate activator.

P-4 through P-5 were polymerized by the process described herein. Copolymerizations were carried out in two single-phase liquid-filled, stirred tank reactors with continuous flow of feeds to the system and continuous withdrawal of products under equilibrium conditions, configured in parallel. All polymerizations were done in a solvent comprising predominantly $C_6$ alkanes, referred to generally as hexane solvent, using soluble metallocene catalysts and discrete, non-coordinating borate anion as co-catalysts. Hydrogen, was added, if necessary, to control molecular weight. The hexane solvent was purified over beds of 3A mole sieves and basic alumina. Reactor temperature was controlled adiabatically by controlled chilling of the feeds and using the heat of polymerization to heat the reactor. The reactors were maintained at a pressure in excess of the vapor pressure of the reactant mixture to keep the reactants in the liquid phase. In this manner the reactors were operated liquid full in a homogeneous single phase. Ethylene and propylene feeds were mixed with a pre-chilled hexane solvent stream. A hexane solution of a tri-n-octyl aluminum scavenger was added to the combined solvent and monomer stream just before it entered the reactor to further reduce the concentration of any catalyst poisons. A mixture of the catalyst components in solvent was pumped separately to the reactor and entered through a separate port. The reaction mixture was stirred aggressively to provide thorough mixing over a broad range of solution viscosities. Flow rates were set to maintain an average residence time in the reactor of about 10 minutes. On exiting the reactor, the copolymer mixture from each reactor was combined and subjected to quenching, a series of concentration steps, heat and vacuum stripping and pelletization, the general conditions of which are described in International Patent Publication WO 99/45041. Properties of P-4 through P-5 are included below in Table 1 and were measured according to the methods described herein.

P-3 is Vistalon™805, an ethylene polymer commercially available from ExxonMobil Chemical Company.

C-1 and C-2 are physical blends of commercial ethylene polymer and propylene polymers, available from ExxonMobil Chemical Company. C-1 is a physical blend of 90 wt% Vistalon™805 and 10 wt% Vistamaxx™3020. C-2 is a physical blend of 90 wt% Vistalon™805 and 10 wt% Vistamaxx™6100. The two components in C-1 and C-2 were physically blended in a ZSK twin screw extruder. The batch size for twin screw compounding was 30 kg. Compounding in the ZSK extruder was accomplished by tumble-blending the two components (listed in Table 1) in a V-cone blender and introducing the blend into the extruder hopper. The melt temperature was maintained at 230°C.

Table 1 - Ethylene-Propylene Copolymer Properties

| | P-1 | P-2 | P-3 | P-4 | P-5 | C-1 | C-2 |
|---|---|---|---|---|---|---|---|
| *Component 1* | | | | | | | |
| Ethylene Content, wt% (NMR) | 82.5 | 76.7 | | | | | |
| Ethylene Content, wt % (IR) | 85.1 | 78.5 | 78.0 | 77.8 | 77.1 | 78.0 | 78.0 |
| ML (1 +4, 125°C) | 35 | 46 | 33 | 32 | 41 | | |
| MI (190°C/2.16 kg) | | | | | 0.23 | | |
| *Component 2* | | | | | | | |
| Ethylene Content, wt% (NMR) | N/A | N/A | N/A | | | 9.2 | 14.7 |
| Ethylene Content, wt % (IR) | N/A | N/A | N/A | 10.7 | 17.4 | 12.0 | 16.0 |
| MFR (230°C/2.16 kg) | N/A | N/A | N/A | 2.4 | 2.4 | 8.5 | 3.0 |
| *Blend (Component 1 and Component 2)* | | | | | | | |
| Polysplit (% of Component 1 in Blend) | 100 | 100 | 100 | 90 | 90 | 90 | 90 |
| Ethylene Content, wt% (NMR) | 82.5 | 76.7 | | | 71.1 | | |
| Ethylene Content, wt % (IR) | 85.1 | 78.5 | 78.0 | 71.8 | 74.3 | | |
| Ethylene Content calculated by polysplit | N/A | N/A | N/A | 71.1 | 71.1 | 71.4 | 71.8 |
| Melt Index, g/10 min | 0.20 | 0.19 | | 0.22 | 0.22 | | |
| $\Delta$Hf, J/g (2nd melt) | 74 | 58 | | 55 | 50 | 25 | 30 |
| Mw/Mn (Mw measured MALLS, Mn measured DRI) | 2.2 | 2.1 | | 2.0 | 2.1 | | |

To test the polymer compositions in a film application, a five layer film having a total thickness of 50 $\mu$m was

prepared. Each film had an outside bubble skin layer (thickness of 12.5 $\mu$m), subskin layer (thickness of 6.25 $\mu$m), core layer (thickness of 12.5 $\mu$m), subskin layer (thickness of 6.25 $\mu$m), and inside bubble skin layer (thickness of 12.5 $\mu$m) was formed. The seven film samples (five comparative and two inventive) are detailed below in Table 2. The films were produced on a 5 layer film blowing line using the following process conditions: Total Output Rate (kg/h) = 120 - 229; Blow Up Ratio = 2.5; Die diameter (mm) = 280; Die gap (mm) = 1.4; Haul-off speed for high throughput (220-229 kg/h) (m/min) = 38.1 and for low throughputs (120-130 kg/h) (m/min) = 20; Frost Line Height (mm) = 800 (low throughput) - and from 850 - 1000 (high throughput); Temperature settings (°C): Extruder D = 190 (outside bubble skin); Extruder C = 190 (outside bubble sub-skin); Extruder B = 220 (core of the bubble); Extruder A = 180-190 (inside bubble sub-skin); Extruder E = 190 (inside bubble skin); Die head = 220.

Each film sample was tested for the following film properties: force, elongation, seal energy, and failure mode. The following method was used, based on ASTM F-2029, to prepare the films for the seal experiments: the produced films were conditioned under controlled temperature and humidity (23 $\pm$ 2°C and 50 $\pm$ 5% relative humidity) for at least 48 hours before seal preparation. Film samples were cut out from the film role in the machine direction to the dimensions 250 mm $\times$ 30 mm. The prepared 30mm wide film samples were folded in the long direction with the sealing layers facing each other. For the reported results, the film samples were folded so that the outside bubble skin layers of the film touched each other to be sealed. The prepared sealing sample was further covered with a Teflon sheet in order to prevent the film from adhering to the sealing bars. The whole construction was submitted to a heat sealing with heated sealing bars at the desired seal temperature with a pressure of 0.5 N/mm$^2$ for 0.5 seconds over a sealing width of 5 mm and cooled down under normal room temperature conditions. For all the samples, the seal temperature was set at 180°C. The seal bar touched the film sample at least 1cm away from the edge of the film. The formed sealed area had the dimensions of 30 mm $\times$ 5 mm. The folded and sealed film sample was then cut at the fold. The sealed samples were conditioned under controlled temperature and humidity (23 $\pm$ 2°C and 50 $\pm$ 5% relative humidity) for at least 48 hours before the actual seal rupture testing. After preparing and conditioning the samples, the conditioned sealed 30 mm wide film samples were further cut to 15 mm width by cutting away the left and right sides of the samples, keeping only the middle part of the sample. The samples were then submitted to tensile testing on an instrumented tensile bench. The speed of the tensile test was set at 500 mm/sec. A minimum amount of 5 samples was measured to test the Energy at Break (or Seal Energy) per film sample. All properties utilized for the evaluation of the failure mode are reported in Table 3. The average of the measured values is reported and a failure mode for each sample is provided.

Failure mode is reported in Table 2. A Failure Mode of "Peeling without Elongation" means the force at maximum was medium, the force at break was low, the elongation at the force at max was low, and the elongation at break was low. A Failure Mode of "Delamination without Elongation" means the force at maximum was high, the force at break was low, the elongation at the force at max was low, and the elongation at break was low. A Failure Mode of "Delamination with Elongation" means the force at maximum was high, the force at break was low, the elongation at the force at max was low, and the elongation at break was high. A Failure Mode of "Elongation with Peeling" means the force at maximum was high, the force at break was low, the elongation at the force at max was high, and the elongation at break was high. A Failure Mode of "Elongation with Delamination" means the force at maximum was high, the force at break was low, the elongation at the force at max was high, and the elongation at break was high. A Failure Mode of "Elongation with Edge Break" means the force at maximum was high, the force at break was high, the elongation at the force at max was high, and the elongation at break was high.

Table 2 - Multi-Layer Film and Properties

| | Comparative Film 1 | Film 2 | Film 3 | Comparative Film 4 | Comparative Film 5 | Film 6 | Film 7 |
|---|---|---|---|---|---|---|---|
| **Layer 1 (outside bubble skin)** | 95 wt% Exceed™ 1018KB and 5 wt% LD150BW | | | | | | |
| **Layer 2 (subskin)** | P-3 | C-1 | C-1 | P-1 | P-2 | P-4 | P-5 |
| **Layer 3 (core)** | Moplen HP456J | | | | | | |
| **Layer 4 (subskin)** | P-3 | C-2 | C-2 | P-1 | P-2 | P-4 | P-5 |
| **Layer 5 (inside bubble skin)** | 95 wt% Exceed™ 1018KB and 5 wt% LD150BW | | | | | | |
| **Failure Mode (5 samples)** | 5 samples delaminated | 4 samples: edge break with elongation/ 1 sample: delaminated with elongation | 2 samples: edge break with elongation/ 3 samples: delaminated with elongation | 1 sample: delaminated with elongation/1 sample: 10% delamination with 90% edge break with elongation/ 2 samples: edge break/ 1 sample: edge break with elongation | 2 samples: 30% delamination with 70% edge break with elongation/2 samples: edge break with elongation/1 sample: edge break with elongation | 4 samples: delaminatio n with elongation; 1 sample: edge break with elongation | 5 samples: edge break with elongati on |

Table 3 - Multi-Layer Film Properties

| | Comparative Film 1 | Film 2 | Film 3 | Comparative Film 4 | Comparative Film 5 | Film 6 | Film 7 |
|---|---|---|---|---|---|---|---|
| **Force at Fmax (N/15 mm)** | 11.5 | 14.2 | 13.8 | 12.1 | 11.9 | 13.9 | 13.7 |
| **Elongation at Fmax (%)** | 13 | 386 | 382 | 17.1 | 17 | 344 | 360 |
| **Force at break (N/15 mm)** | 2.33 | 11.4 | 10.7 | 10.2 | 10.1 | 9.8 | 13.6 |
| **Elongation at break (%)** | 148 | 419 | 434 | 110 | 131 | 423 | 366 |
| **Energy at Fmax (J/15 mm)** | 0.1 | 2.23 | 2.1 | 0.08 | 0.08 | 2.0 | 2.07 |
| **Seal Energy (J/ 15mm)** | 0.37 | 2.4 | 2.4 | 0.56 | 0.69 | 2.3 | 2.1 |
| **Total Output Rate (kg/hr)** | 120 | 120 | 120 | 228 | 225 | 120 | 229 |
| **Mode of Sealing** | Sealed Inside/ Inside (P3/P3-P3/P3) | Sealed Inside/ Inside (C2/C1-C1/C2) | Sealed Outside/ Outside (C1/C2-C2/C1) | Sealed Inside/ Inside (P1/P1-1/P1) | Sealed Inside/ Inside (P2/P2-P2/P2) | Sealed Inside/ Inside (P4/P4-P4/P4) | Sealed Inside/ Inside (P5/P5-P5/P5) |

As Tables 2 and 3 show, comparative films 2 and 3, and inventive films 6 and 7 having dual blend polymer compositions in the subskin layers showed favorably high seal energies. In contrast, films with PE polymers in the subskin (i.e., Comparative Film 1 having only Vistalon polymers) showed unfavorably low seal energies due to poor compatibility between the outside bubble skin layer 1 (PE-based layer) and the Core layer (PP-based layer) and between the inside bubble layer (PE-based layer) and the Core layer (PP-based layer). As C-1 and C-2 are blends of commercial samples, it is expected that these blends are more homogenous than a reactor blend of novel non-commercial materials P-4 and P-5. Films 6 and 7 having inventive dual reactor blend polymer compositions in the subskin layers show favorably high seal energies (high force and high elongation). Comparative films 4 and 5, produced with single reactor polymers, show poor seal energies (relatively high force with low elongation). The subskin in these films is not functioning as a compatibilizer or tie layer due to the use of only a single component resulting in poor seal energy.

Certain embodiments and features have been described using a set of numerical upper limits and a set of numerical lower limits. It should be appreciated that ranges from any lower limit to any upper limit are contemplated unless otherwise indicated. All numerical values are "about" or "approximately" the indicated value, and take into account experimental error and variations that would be expected by a person having ordinary skill in the art.

As used herein, the phrases "substantially no," and "substantially free of' are intended to mean that the subject item is not intentionally used or added in any amount, but may be present in very small amounts existing as impurities resulting from environmental or process conditions.

**Claims**

1. A polymer blend composition, comprising:

    (a) from 65 wt% to 90 wt% based on the total weight of the blend of an ethylene $\alpha$-olefin elastomer having either no crystallinity or crystallinity derived from ethylene, having greater than 75 wt% units derived from ethylene; and (b) from 10 wt% to 35 wt% based on the total weight of the blend of a propylene polymer having 40 wt% or more units derived from propylene, having a heat of fusion equal to or below 75 J/g, and having isotactically arranged propylene derived sequences;

wherein the polymer blend composition has a melt index (measured at 2.16 kg at 190°C) of 0.01 to 10 g/10 min; and

wherein the ethylene $\alpha$-olefin elastomer and the propylene polymer are prepared in separate reactors arranged in parallel configuration.

2. The polymer blend composition of claim 1, wherein the composition is a reactor blend of the ethylene $\alpha$-olefin elastomer and the propylene polymer.

3. The polymer blend composition of claim 1 or 2, having a polydispersity index (Mw/Mn) of less than 5.0.

4. The polymer blend composition of any preceding claim, comprising from 55 wt% to 85 wt% units derived from ethylene.

5. The polymer blend composition of any preceding claim, wherein the propylene polymer is prepared using a metallocene catalyst.

6. The polymer blend composition of any preceding claim, wherein the polymer is substantially free of diene units.

7. An article comprising the polymer blend composition of any one of claims 1 to 5, wherein the polymer blend composition is present in the article in the amount of 5 wt% to 70 wt%.

8. The article of claim 7, wherein the article is a multilayer film or monolayer film.

9. A process for forming the polymer blend composition of claim 1, comprising the steps of:

(a) polymerizing ethylene, propylene, and optionally C4-C20 $\alpha$-olefins to form an ethylene $\alpha$-olefin elastomer in a first reactor; and
(b) polymerizing propylene, ethylene, and optionally C4-C20 $\alpha$-olefins to form a propylene polymer in a second reactor; and
(c) recovering the ethylene $\alpha$-olefin elastomer and the propylene polymer and blending the ethylene $\alpha$-olefin elastomer and the propylene polymer to form a polymer blend composition;
wherein the first reactor and second reactor are arranged in parallel configuration.

10. The process of claim 9, wherein the composition is a reactor blend of the ethylene $\alpha$-olefin elastomer and the propylene polymer.

11. The process of claim 9 or 10, conducted in a solution process.

12. The process of any one of claims 9 to 11, wherein a catalyst used to form the ethylene $\alpha$-olefin elastomer in the first reactor is different from a catalyst used to form the propylene polymer in the second reactor.

**Patentansprüche**

1. Polymergemischzusammensetzung, die

(a) 65 Gew.% bis 90 Gew.%, bezogen auf das Gesamtgewicht des Gemisches, Ethylen-$\alpha$-Olefinelastomer umfasst, das entweder keine Kristallinität oder von Ethylen abgeleitete Kristallinität aufweist, wobei mehr als 75 Gew.% der Einheiten von Ethylen abgeleitet sind, und
(b) 10 Gew.% bis 35 Gew.%, bezogen auf das Gesamtgewicht des Gemisches, Propylenpolymer mit 40 Gew.% oder mehr von Propylen abgeleiteten Einheiten, mit einer Schmelzwärme gleich oder kleiner als 75 J/g und mit isotaktisch angeordneten von Propylen abgeleiteten Sequenzen umfasst,

wobei die Polymergemischzusammensetzung einen Schmelzindex (gemessen mit 2,16 kg bei 190°C) von 0,01 bis 10 g/10 Minuten aufweist, und
wobei das Ethylen-$\alpha$-Olefinelastomer und das Propylenpolymer in separaten Reaktoren hergestellt werden, die in paralleler Konfiguration angeordnet sind.

2. Polymergemischzusammensetzung nach Anspruch 1, bei der die Zusammensetzung ein Reaktorgemisch des Ethylen-$\alpha$-Olefinelastomers und des Propylenpolymers ist.

3. Polymergemischzusammensetzung nach Anspruch 1 oder 2 mit einem Polydispersitätsindex (Mw/Mn) kleiner als 5,0.

4. Polymergemischzusammensetzung nach einem der vorhergehenden Ansprüche, die 55 Gew.% bis 85 Gew.% von Ethylen abgeleitete Einheiten umfasst.

5. Polymergemischzusammensetzung nach einem der vorhergehenden Ansprüche, bei der das Propylenpolymer unter Verwendung von Metallocenkatalysator hergestellt ist.

6. Polymergemischzusammensetzung nach einem der vorhergehenden Ansprüche, bei der das Polymer im Wesentlichen frei von Dieneinheiten ist.

7. Artikel, der die Polymergemischzusammensetzung gemäß einem der Ansprüche 1 bis 5 umfasst, wobei die Polymergemischzusammensetzung in dem Artikel in der Menge von 5 Gew.% bis 70 Gew.% vorhanden ist.

8. Artikel nach Anspruch 7, der eine Mehrschichtfolie oder Monoschichtfolie ist.

9. Verfahren zum Bilden der Polymergemischzusammensetzung nach Anspruch 1, das die Schritte umfasst, in denen

(a) Ethylen, Propylen und gegebenenfalls $C_4$- bis $C_{20}$-$\alpha$-Olefine in einem ersten Reaktor polymerisiert werden, um Ethylen-$\alpha$-Olefin-Elastomer zu bilden, und
(b) Propylen, Ethylen und gegebenenfalls $C_4$- bis $C_{20}$-$\alpha$-Olefine in einem zweiten Reaktor polymerisiert werden, um Propylenpolymer zu bilden, und
(c) das Ethylen-$\alpha$-Olefinelastomer und das Propylenpolymer gewonnen und das Ethylen-$\alpha$-Olefinelastomer und das Propylenpolymer gemischt werden, um eine Polymergemischzusammensetzung zu bilden, wobei der erste Reaktor und der zweite Reaktor in paralleler Konfiguration angeordnet sind.

10. Verfahren nach Anspruch 9, bei dem die Zusammensetzung ein Reaktorgemisch des Ethylen-$\alpha$-Olefinelastomers und des Propylenpolymers ist.

11. Verfahren nach Anspruch 9 oder 10, das in einem Lösungsverfahren durchgeführt wird.

12. Verfahren nach einem der Ansprüche 9 bis 11, bei dem ein Katalysator, der zur Bildung des Ethylen-$\alpha$-Olefinelastomers in dem ersten Reaktor verwendet wird, sich von einem Katalysator unterscheidet, der zur Bildung des Propylenpolymers in dem zweiten Reaktor verwendet wird.

**Revendications**

1. Composition de mélange de polymères, comprenant :

(a) de 65 % en poids à 90 % en poids sur la base du poids total du mélange d'un élastomère d'éthylène $\alpha$-oléfine soit ne possédant aucune cristallinité, soit possédant une cristallinité issue de l'éthylène, possédant plus de 75 % en poids de motifs issus de l'éthylène ; et
(b) de 10 % en poids à 35 % en poids sur la base du poids total du mélange d'un polymère de propylène possédant 40 % en poids ou plus de motifs issus du propylène, possédant une chaleur de fusion égale ou inférieure à 75 J/g, et possédant des séquences issues du propylène agencées de manière isotactique ;

la composition de mélange de polymère possédant un indice de fluidité à chaud (mesuré à 2,16 kg à 190 °C) de 0,01 à 10 g/10 min ; et
l'élastomère d'éthylène $\alpha$-oléfine et le polymère de propylène étant préparés dans des réacteurs distincts agencés en configuration parallèle.

2. Composition de mélange de polymères selon la revendication 1, la composition étant un mélange de réacteur de l'élastomère d'éthylène α-oléfine et du polymère de propylène.

3. Composition de mélange de polymères selon la revendication 1 ou 2, possédant un indice de polydispersité (Mw/Mn) inférieur à 5,0.

4. Composition de mélange de polymères selon une quelconque revendication précédente, comprenant de 55 % en poids à 85 % en poids de motifs issus de l'éthylène.

5. Composition de mélange de polymères selon une quelconque revendication précédente, le polymère de propylène étant préparé en utilisant un catalyseur de type métallocène.

6. Composition de mélange de polymères selon une quelconque revendication précédente, le polymère étant sensiblement exempt de motifs de diène.

7. Article comprenant la composition de mélange de polymères selon l'une quelconque des revendications 1 à 5, la composition de mélange de polymères étant présente dans l'article en la quantité de 5 % en poids à 70 % en poids.

8. Article selon la revendication 7, l'article étant un film multicouche ou un film monocouche.

9. Procédé pour la formation de la composition de mélange de polymères selon la revendication 1, comprenant les étapes de :

(a) polymérisation d'éthylène, de propylène, et éventuellement d'α-oléfines en C4 à C20 pour former un élastomère d'éthylène α-oléfine dans un premier réacteur ; et
(b) polymérisation de propylène, d'éthylène, et éventuellement d'α-oléfines en C4 à C20 pour former un polymère de propylène dans un deuxième réacteur ; et
(c) récupération de l'élastomère d'éthylène α-oléfine et du polymère de propylène et mélange de l'élastomère d'éthylène α-oléfine et du polymère de propylène pour former une composition de mélange de polymères ; le premier réacteur et le deuxième réacteur étant agencés dans une configuration parallèle.

10. Procédé selon la revendication 9, la composition étant un mélange de réacteur de l'élastomère d'éthylène α-oléfine et du polymère de propylène.

11. Procédé selon la revendication 9 ou 10, conduit en un procédé en solution.

12. Procédé selon l'une quelconque des revendications 9 à 11, un catalyseur utilisé pour former l'élastomère d'éthylène α-oléfine dans le premier réacteur étant différent d'un catalyseur utilisé pour former le polymère de propylène dans le deuxième réacteur.

**EP 3 436 521 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5747592 A
- US 8618033 B
- US 7585917 B
- US 6207756 B
- US 6319998 B
- US 20090163642 A
- US 6686415 B
- EP 277003 A
- EP 277004 A
- EP 426637 A
- WO 03040201 A
- US 6559262 B
- EP 1070087 A
- US 5198401 A
- US 5391629 A
- US 5026798 A
- US 4522982 A
- US 5747621 A
- US 5969070 A
- US 6048950 A
- WO 9827154 A
- US 6448358 B
- US 6265212 B
- EP 426638 A
- WO 9945041 A

### Non-patent literature cited in the description

- **RANDALL.** A Review Of High Resolution Liquid 13Carbon Nuclear Magnetic Resonance Characterization of Ethylene-Based Polymers. *Polymer Reviews,* 1989, vol. 29 (2), 201-317
- **T. SUN ; P. BRANT ; R. R. CHANCE ; W. W. GRAESSLEY.** *Macromolecules,* 2001, vol. 34 (19), 6812-6820
- **M.B. HUGLIN.** LIGHT SCATTERING FROM POLYMER SOLUTIONS. Academic Press, 1971
- **SASSMANNSHAUSEN ; BOCHMANN ; ROSCH ; LILGE.** *J. Organomet. Chem.,* 1997, vol. 548, 23-28

**20**